# FASCICULE DE BREVET EUROPEEN

(11) **EP 3 894 264 B1**
(45) Date de publication et mention de la délivrance du brevet: **28.10.2026**
(21) Numéro de dépôt: 19813887.7
(22) Date de dépôt: 10.12.2019
(51) Int. Cl.: B60L 13/08, B60L 13/06, B60F 5/00, B60G 17/016, B60G 17/018, B62D 61/12

(54) **SYSTEME DE DEPLACEMENT AU SOL D'UN VEHICULE DE TRANSPORT TERRESTRE SUSCEPTIBLE DE LEVITER**
SYSTEM ZUR BEWEGUNG ENTLANG DES BODENS EINES TERRESTRISCHEN TRANSPORTFAHRZEUGS MIT SCHWEBEFÄHIGKEIT
SYSTEM FOR TRAVEL ALONG THE GROUND OF A TERRESTRIAL TRANSPORT VEHICLE CAPABLE OF LEVITATING

(30) Priorité: 10.12.2018 FR 1872625
(43) Date de publication de la demande: 20.10.2021
(73) Titulaire: Safran Landing Systems, 78140 Vélizy-Villacoublay (FR)
(72) Inventeur: KLIM, Graeme, 77550 Moissy-Cramayel (FR); ELLIS, Andrew, 77550 Moissy-Cramayel (FR)
(74) Mandataire: Cabinet Boettcher
(86) Numéro de dépôt international: PCT/EP2019/084476
(87) Numéro de publication internationale: WO 2020/120496

(56) Documents cités:
- FR-A1- 3 013 665
- GB-A- 2 366 269
- US-A- 5 359 490
- US-A1- 2012 046 827
- US-B1- 9 272 599

## Description

L'invention concerne le domaine des systèmes de déplacement au sol d'un véhicule de transport terrestre susceptible de léviter.

### ARRIERE PLAN DE L'INVENTION

Certaines entreprises particulièrement innovantes travaillent aujourd'hui, dans le monde entier, sur des projets visant à tester en conditions réelles puis à mettre en service un système de transport révolutionnaire appelé *« Hyperloop ^{®}* ». Ce système de transport consiste à faire circuler à haute vitesse des capsules pressurisées, contenant des voyageurs ou des marchandises, dans un réseau de tubes sous vide (ou à très basse pression).

Le déplacement d'une capsule à haute vitesse utilise généralement, dans ces projets, le principe de la propulsion par induction magnétique. La capsule est propulsée par des moteurs à induction linéaire qui sont positionnés à intervalles réguliers dans le tube.

On met aussi en œuvre une lévitation de la capsule, qui permet à la capsule de glisser dans le tube sans friction (ou presque). Cette lévitation nécessite la création d'une force sustentatrice. La sustentation peut être magnétique, et est alors obtenue en équipant la capsule d'aimants. La sustentation peut aussi être une sustentation par coussin d'air.

Le « décollage » de la capsule à l'intérieur du tube, et le maintien en lévitation, nécessitent que la capsule dépasse une certaine vitesse.

A basse vitesse, c'est-à-dire aux alentours et en dessous de 100km/h environ, on envisage d'utiliser un système de déplacement au sol plus traditionnel. Par « au sol », on entend ici que la capsule se trouve au sol, en l'occurrence à l'intérieur du tube, sans être en lévitation. Le « sol » peut ainsi être par exemple un sol plat ou une piste de géométrie quelconque.

On munit donc la capsule de roues, de dispositifs d'entraînement pour entraîner les roues en rotation, et de freins des roues pour freiner la capsule. Il est fondamental d'assurer que le système de déplacement au sol soit capable de conférer une accélération importante à la capsule au moment de son départ, mais aussi que ce système soit capable de freiner efficacement la capsule lorsque celle-ci atteint sa destination.

Les documents antérieurs US 2012/046827 A1, US 9 272 599 B1, FR 3 013 665 A1, GB 2 366 269 A, US 5 359 490 A fournissent des systèmes avec des structures de lévitation et de répartition du poids.

### OBJET DE L'INVENTION

L'invention a pour objet un système de déplacement au sol d'un véhicule de transport terrestre susceptible de léviter, ayant des performances d'accélération et de freinage élevées.

### RESUME DE L'INVENTION

En vue de la réalisation de ce but, on propose un système de déplacement au sol d'un véhicule de transport terrestre susceptible de léviter, comportant une pluralité de roues comprenant au moins une roue actionnée, un dispositif d'entraînement de la roue actionnée et/ou un frein de la roue actionnée, un actionneur de positionnement vertical agencé pour déplacer verticalement la roue actionnée par rapport à un fuselage du véhicule, et des moyens de commande agencés pour, au cours d'une phase d'accélération et/ou au cours d'une phase de freinage du véhicule, piloter l'actionneur de positionnement vertical de manière à ajuster une position verticale de la roue actionnée pour augmenter une charge reposant sur la roue actionnée et donc pour augmenter un effort maximal transmissible au sol par la roue actionnée, de manière à augmenter un couple maximal d'entraînement et/ou de freinage pouvant être produit par le dispositif d'entraînement et/ou par le frein sans que la roue actionnée ne patine ou ne glisse.

On sait que, pendant une phase d'accélération au sol d'un véhicule de transport terrestre susceptible de léviter de l'art antérieur, les roues entraînées (c'est-à-dire équipées d'un dispositif d'entraînement en rotation) peuvent produire un couple d'entraînement maximal au-delà duquel un patinage se produit. Le couple d'entraînement maximal dépend notamment de la charge appliquée sur la roue entraînée, du coefficient de frottement entre la roue entraînée et le sol, et de l'état de la surface de contact entre le véhicule et le sol. De même, pendant une phase de freinage, les roues freinées peuvent produire un couple de freinage maximal au-delà duquel un glissement se produit.

Ces phénomènes de patinage et de glissement réduisent les performances en accélération et en freinage du véhicule, en particulier au cours de situations d'urgence où une accélération très élevée ou un freinage très fort peuvent être nécessaires. Lorsque des pneumatiques sont utilisés, la réduction des performances est plus importante lorsque que le poids du véhicule ou la pression des pneumatiques sont susceptible de varier selon une plage importante, et lorsque les pneumatiques sont usés.

Si la roue actionnée est une roue entraînée, c'est-à-dire équipée d'un dispositif d'entraînement, le système de déplacement au sol selon l'invention permet, en ajustant la position verticale de la roue actionnée, d'augmenter le couple d'entraînement maximal pouvant être produit sans patinage.

De même, si la roue actionnée est une roue freinée, c'est-à-dire équipée d'un frein, le système de déplacement au sol selon l'invention permet, en ajustant la position verticale de la roue freinée, d'augmenter le couple de freinage maximal pouvant être produit sans glissement.

On augmente ainsi les performances en accélération et en freinage du véhicule.

On propose en outre un véhicule de transport terrestre susceptible de léviter, comprenant le système de déplacement au sol qui vient d'être décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
- la figure 1 représente un schéma d'un système de déplacement au sol selon l'invention ;
- la figure 2 est une vue de côté schématique d'une capsule *Hyperloop ^{®},* sur laquelle figurent des roues actionnées et des actionneurs de positionnement vertical des roues actionnées ;
- la figure 3 représente un schéma fonctionnel mis en œuvre dans des moyens de commande du système de déplacement au sol selon l'invention.

### DESCRIPTION DETAILLEE DE L'INVENTION

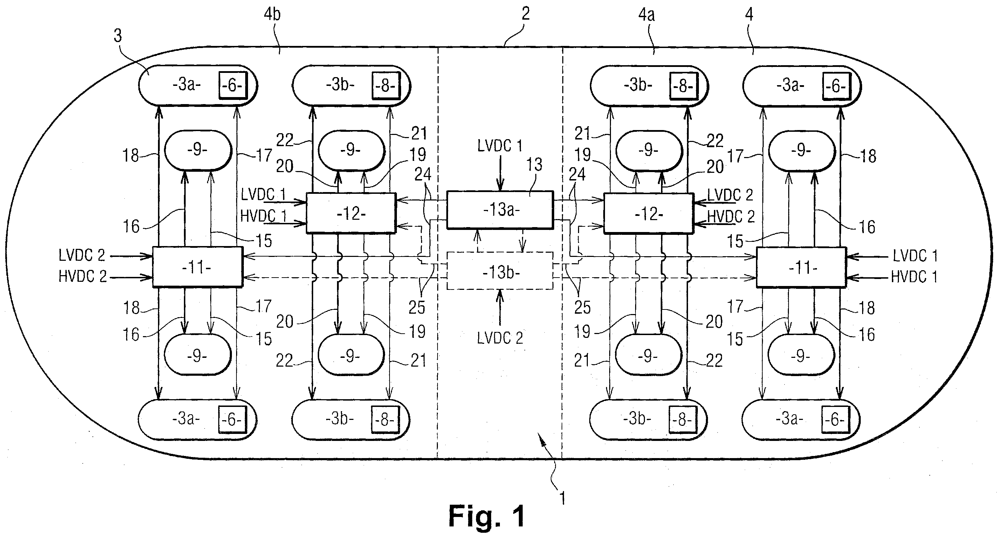

En référence à la figure 1, un système de déplacement au sol selon l'invention 1 d'une capsule *Hyperloop ^{®}* 2 comporte ici huit roues 3 dites « actionnées », positionnées sur deux bogies 4a, 4b indépendants. Par « actionnées », on entend que des mouvements de ces roues 3 sont commandés directement par des actionneurs associés auxdites roues 3. On n'évoque pas ici les roues « non actionnées », roulant librement, que peut comporter éventuellement (mais pas nécessairement) la capsule 2.

Chaque roue actionnée 3 est ici munie d'un pneumatique.

Chaque bogie 4 comporte donc quatre roues actionnées 3, c'est-à-dire deux roues actionnées 3 positionnées sur un côté droit et deux roues actionnées 3 positionnées sur un côté gauche dudit bogie 4.

Sur chaque bogie 4, on trouve deux roues actionnées 3 internes, positionnées vers l'intérieur de la capsule 2, et deux roues actionnées 3 externes, positionnées vers l'extérieur de la capsule 2.

On distingue, parmi les roues actionnées 3, des roues dites « entraînées » 3a et des roues dites « freinées » 3b. Les roues entraînées 3a sont les roues actionnées 3 externes. Les roues freinées 3b sont les roues actionnées 3 internes.

Le système de déplacement au sol 1 comporte, pour chaque bogie 4, deux dispositifs d'entraînement 6.

Chaque dispositif d'entraînement 6 est destiné à entraîner en rotation une roue entraînée 3a. Un dispositif d'entraînement 6 est bien sûr utilisé au moment de l'accélération de la capsule 2, mais peut aussi être utilisé pour freiner la capsule 2 en conférant aux roues entraînées 3a un couple agissant dans un sens opposé au sens de l'accélération conférée par le déplacement de la capsule 2.

Ici, les dispositifs d'entraînement 6 sont indépendants. Chaque dispositif d'entraînement 6 comporte un moteur électrique. Le moteur électrique comprend un arbre de sortie qui coopère avec la roue entraînée 3a associée, via une interface mécanique comprenant éventuellement un système de réduction et/ou un système d'embrayage, pour entraîner la roue entraînée 3a en rotation.

Le système de déplacement au sol 1 comporte, pour chaque bogie 4, deux freins 8, c'est à dire un frein 8 associé à chaque roue freinée 3b et destiné à freiner ladite roue freinée 3b.

Les freins 8 sont indépendants. Chaque frein 8 comporte des organes de friction, par exemple un empilage de disques rotor/stators réalisés dans des matériaux compatibles avec les conditions environnementales et les performances de freinage et d'usure attendues, et des actionneurs de freinage.

Ici, les actionneurs de freinage sont des actionneurs électromécaniques. Chaque actionneur de freinage comporte un moteur électrique et un poussoir. Le moteur électrique d'un actionneur de freinage entraîne le poussoir qui se déplace linéairement en regard des organes de friction du frein 8 d'une roue freinée 3b et qui exerce un effort de freinage sur les organes de friction pour freiner la roue freinée 3b.

Le système de déplacement au sol comporte aussi, pour chaque bogie 4, quatre actionneurs de positionnement vertical 9. Chaque actionneur de positionnement vertical 9 permet de déplacer verticalement une roue actionnée 3 (c'est-à-dire une roue entraînée 3a ou une roue freinée 3b) par rapport à un fuselage (ou à un bogie) de la capsule 2, et d'ajuster la position verticale de la roue actionnée 3.

Ici, les actionneurs de positionnement vertical 9 sont des actionneurs électromécaniques indépendants.

Chaque actionneur de positionnement vertical 9 comporte une jambe comprenant un cylindre solidaire du fuselage de la capsule 2 et une tige qui coulisse dans le cylindre. Une roue actionnée 3 est montée au bas de la tige.

Chaque actionneur de positionnement vertical 9 comporte de plus un moteur électrique. Le moteur électrique entraîne la tige qui se déplace linéairement et qui déplace ainsi verticalement la roue actionnée 3.

Chaque actionneur de positionnement vertical 9 comprend par ailleurs un dispositif d'amortissement et de ressort.

On note que chaque actionneur de positionnement vertical 9 joue aussi le rôle d'un actionneur d'extension / rétraction. L'actionneur de positionnement vertical 9 étend la tige au bas de laquelle se trouve une roue actionnée 3 pour poser la roue actionnée 3 au sol au cours des phases d'accélération et de freinage au sol de la capsule 2, et rétracte la tige lorsque la capsule 2 rentre en lévitation.

On note qu'un mode de réalisation possible du basculement de la tige porteuse de la roue peut être le suivant. Le caisson pourrait être fileté sur sa face externe. Une vis mise en rotation par le moteur peut ainsi se déplacer sur le caisson. Un bras de levier va permettre la descente ou la remontée de la roue.

Pour piloter et alimenter les moteurs électriques des dispositifs d'entraînement 6, des actionneurs de freinage des freins 8 et des actionneurs de positionnement vertical 9, le système de déplacement au sol 1 comprend des moyens de commande. Les moyens de commande comprennent deux premiers modules électriques de puissance 11 (un par bogie 4), deux deuxièmes modules électriques de puissance 12 (un par bogie 4), et deux modules électriques de contrôle 13.

Dans chaque bogie 4, le premier module électrique de puissance 11 est relié à chacun des actionneurs de positionnement vertical 9 des roues entraînées 3a par une ligne de signal 15 (distincte pour chaque actionneur) et par une ligne de puissance 16 (distincte pour chaque actionneur).

Dans chaque bogie 4, le premier module électrique de puissance 11 est relié à chacun des dispositifs d'entraînement 6 des roues entraînées 3a par une ligne de signal 17 (distincte pour chaque dispositif) et par une ligne de puissance 18 (distincte pour chaque dispositif).

Dans chaque bogie 4, le deuxième module électrique de puissance 12 est relié à chacun des actionneurs de positionnement vertical 9 des roues freinées 3b par une ligne de signal 19 (distincte pour chaque actionneur) et par une ligne de puissance 20 (distincte pour chaque actionneur).

Dans chaque bogie 4, le deuxième module électrique de puissance 12 est relié à chacun des freins 8 (et donc de leurs actionneurs de freinage) des roues freinées 3b par une ligne de signal 21 (distincte pour chaque frein) et par une ligne de puissance 22 (distincte pour chaque frein) .

Chaque module électrique de puissance 11, 12 comprend des composants électriques (*hardware*) et logiciels (*software*) qui lui permettent d'alimenter et de contrôler les moteurs électriques auxquels il est connecté. Le contrôle en question inclut le contrôle des moteurs électriques, des actionneurs eux-mêmes (dispositifs d'entraînement, actionneurs de freinage, actionneurs de positionnement vertical), la distribution de puissance, la gestion thermique et la gestion de l'usure des pneumatiques des roues actionnées 3.

Des courants électriques de pilotage, permettant de piloter les moteurs électriques, circulent sur les lignes de puissance 16, 18, 20, 22.

Des données échangées entre les actionneurs et les modules électrique de puissance 11, 12 circulent sur les lignes de signal 15, 17, 19, 21. Ces données circulent possiblement dans les deux sens et comprennent notamment des données de mesure produites par des capteurs positionnés dans ou à proximité des moteurs, des actionneurs, des organes de friction des freins 8, etc.

Le premier module électrique de puissance 11 du bogie 4a est alimenté par un premier bus de puissance haute tension HVDC 1 et par un premier bus de puissance basse tension LVDC 1.

Le deuxième module électrique de puissance 12 du bogie 4a est alimenté par un deuxième bus de puissance haute tension HVDC 2 et par un deuxième bus de puissance basse tension LVDC 2.

Le premier module électrique de puissance 11 du bogie 4b est alimenté par le deuxième bus de puissance haute tension HVDC 2 et par le deuxième bus de puissance basse tension LVDC 2.

Le deuxième module électrique de puissance 12 du bogie 4b est alimenté par le premier bus de puissance haute tension HVDC 1 et par le premier bus de puissance basse tension LVDC 1.

Les deux modules électriques de contrôle 13 comprennent un module électrique de contrôle principal 13a et un module électrique de contrôle alternatif 13b.

Le module électrique de contrôle principal 13a est relié à chacun des deux premiers modules électriques de puissance 11 et des deux deuxièmes modules électriques de puissance 12 par une ligne de signal 24 distincte (soit quatre lignes de signal 24 distinctes).

Le module électrique de contrôle principal 13a est alimenté par le premier bus de puissance basse tension LVDC 1.

De même, le module électrique de contrôle alternatif 13b est relié à chacun des deux premiers modules électriques de puissance 11 et des deux deuxièmes modules électriques de puissance 12 par une ligne de signal 25 distincte (soit quatre lignes de signal 25 distinctes).

Le module électrique de contrôle alternatif 13b est alimenté par le deuxième bus de puissance basse tension LVDC 2.

Les modules électriques de contrôle 13 transmettent des signaux de commande aux modules électriques de puissance 11, 12. Les modules électriques de puissance 11, 12 génèrent les courants électriques de commande, à destination des moteurs électriques, à partir des signaux de commande et de l'énergie électrique provenant des bus de puissance HVDC, LVDC.

Ici, les modules électriques de contrôle 13 sont re-dondés. Les modules électriques de contrôle 13 fonctionnent selon un mode actif - passif. En fonctionnement normal, seul le module électrique de contrôle principal 13a est activé pour produire les signaux de commande. En cas de panne impactant le module électrique de contrôle principal 13a, ce dernier est désactivé et c'est le module électrique de contrôle alternatif 13b qui produit les signaux de commande. On note qu'il serait possible de mettre en œuvre un mode actif - actif dans lequel, par exemple, les modules électriques de contrôle 13 produisent les signaux de commande à tour de rôle.

L'architecture présentée ici est donc redondante au niveau des modules électriques de contrôle 13, mais aussi au niveau des bus de puissance haute et basse tension. Une perte de l'un des deux bus de puissance haute tension HVDC, ou de l'un des deux bus de puissance basse tension LVDC, ne peut pas conduire à la perte de plus d'un module électrique de contrôle 13, de plus de 50% des dispositifs d'entraînement 6, de plus de 50% des freins 8, de plus de 50% des actionneurs de positionnement vertical 9.

Les moyens de commande qui viennent d'être décrits, et qui comprennent les modules électriques de puissance 11, 12 et les modules électriques de contrôle 13, permettent, au cours d'une phase d'accélération, d'ajuster de manière indépendante les position verticales des roues entraînées 3a pour augmenter les charges reposant sur les roues entraînées 3a et donc pour augmenter les efforts maximaux transmissibles au sol par les roues entraînées 3a, de manière à augmenter les couples maximaux d'entraînement pouvant être produits par les dispositifs d'entraînement 6 sans que les roues entraînées 3a ne patinent.

De même, les moyens de commande permettent, au cours d'une phase de freinage, d'ajuster de manière indépendante les positions verticales des roues entraînées 3a et des roues freinées 3b pour augmenter les charges reposant sur les roues entraînées 3a et sur les roues freinées 3b, et donc pour augmenter les efforts maximaux transmissibles au sol par les roues entraînées 3a et par les roues freinées 3b, de manière à augmenter les couples maximaux de freinage pouvant être produits par les dispositifs d'entraînement 6 et par les freins 8 sans que les roues entraînées 3a et les roues freinées 3b ne glissent.

Le fonctionnement du système de déplacement au sol selon l'invention est le suivant.

Au cours des phases d'accélération de la capsule 2, chaque dispositif d'entraînement 6 produit un couple d'entraînement pour entraîner la roue entraînée 3a associée en rotation. Le couple d'entraînement peut être augmenté jusqu'à un couple d'entraînement maximal au-delà duquel la roue entraînée 3a pourrait patiner.

Lorsque le couple d'entraînement s'approche du couple d'entraînement maximal, l'actionneur de positionnement vertical 9 associée à ladite roue entraînée 3a transfère une partie de la charge de la capsule 2 en éloignant légèrement la roue entraînée 3a du fuselage de la capsule 2a. La roue entraînée 3a appuie donc sur le sol de manière plus importante. On augmente ainsi la charge (ou le poids) reposant sur la roue entraînée 3a. L'effort maximal transmissible au sol par la roue entraînée 3a augmente. A coefficient de friction constant entre la surface du sol du tube et la surface d'usure (c'est-à-dire la surface du pneumatique en contact avec le sol) de la roue entraînée 3a, on peut ainsi augmenter le couple d'entraînement maximal et donc l'accélération conférée à la roue entraînée 3a. La modification de charge peut être surveillée par des capteurs, et notamment par des capteurs de charge, de couple, de pression, de déplacement, etc.

Au cours des phases de freinage de la capsule 2, chaque frein 8 produit un couple de freinage pour freiner la roue freinée 3b associée. De même, chaque dispositif d'entraînement 6 produit un couple arrière formant un couple de freinage permettant de freiner la roue entraînée 3a associée. Chacun de ces couples de freinage peut être augmenté jusqu'à un couple de freinage maximal au-delà duquel la roue freinée 3b ou bien la roue entraînée 3a pourrait glisser.

Lorsque le couple de freinage s'approche du couple de freinage maximal, l'actionneur de positionnement vertical 9 associée à ladite roue actionnée 3 (c'est-à-dire entraînée 3a ou freinée 3b) transfère une partie de la charge de la capsule 2 en éloignant légèrement la roue actionnée 3 du fuselage de la capsule 2.

On augmente ainsi la charge (ou le poids) reposant sur la roue actionnée 3. L'effort maximal transmissible au sol par la roue actionnée 3 augmente. A coefficient de friction constant entre la surface du sol du tube et la surface du pneumatique de la roue actionnée 3, on peut ainsi augmenter le couple de freinage maximal et donc le freinage produit par la roue actionnée 3. Ici, l'augmentation de la charge augmente la surface de contact entre le pneumatique et le sol, et donc augmente la prise au sol du pneumatique.

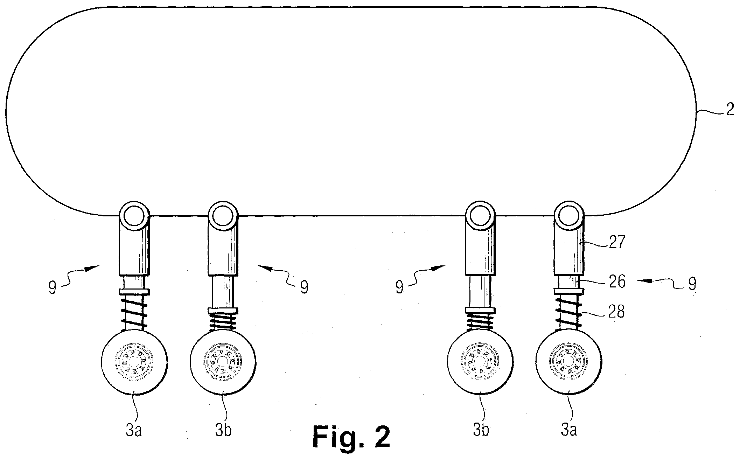

Ainsi, en référence à la figure 2, on voit que, au cours d'une phase de freinage, la position verticale des roues freinées 3b est telle que celles-ci sont légèrement éloignées du fuselage de la capsule 2. La distance entre le centre de chaque roue freinée 3b et le fuselage est légèrement supérieure à la distance entre le centre de chaque roue entraînée 3a et le fuselage. Les tiges 26 des actionneurs de positionnement vertical 9, qui coulissent dans les cylindres 27, sont positionnées à des hauteurs différentes, tout en maintenant constants la hauteur, le tangage, le roulis et le lacet de la capsule 2. On voit que chaque actionneur de positionnement vertical 9 est muni d'un système de ressort 28.

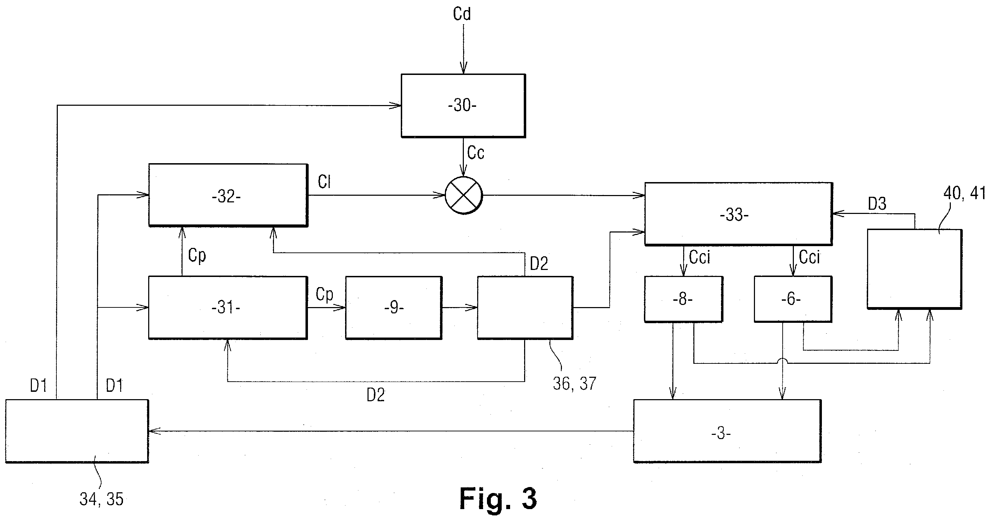

En référence à la figure 3, les moyens de commande mettent en œuvre un schéma fonctionnel comprenant un contrôleur central 30, un contrôleur de positionnement vertical 31, un contrôleur de limitation de couple 32, et un distributeur de couple 33.

Le contrôleur central 30 reçoit une consigne de déplacement Cd de la capsule 2, qui a pour but d'accélérer ou de freiner la capsule 2. La consigne de déplacement Cd de la capsule 2 est produite par un pilote de la capsule 2, par exemple via une pédale, par un système de pilotage automatique de la capsule 2, ou bien par un régulateur de vitesse de la capsule 2, par un système de freinage automatique de la capsule 2, etc.

Le contrôleur central 30 acquiert aussi des premières données D1 représentatives notamment de la dynamique de la capsule 2.

Ces premières données D1 comprennent des mesures de premiers paramètres, qui sont produites directement par des premiers capteurs 34, ou bien des estimations de ces premiers paramètres, qui sont produites par des premiers algorithmes d'estimation 35.

Les premiers paramètres comprennent par exemple des paramètres propres à la capsule 2 dans son ensemble : vitesse et accélération de la capsule 2, température de la capsule 2, données inertielles, etc.

Les premiers paramètres comprennent aussi par exemple des paramètres propres à chaque roue de la capsule 2 : vitesse de rotation de la roue, accélération, glissement du pneumatique de la roue, pression du pneumatique, température des organes de friction du frein, etc.

Les premiers paramètres comprennent de plus par exemple des paramètres externes à la capsule 2 : conditions du sol du tube dans lequel circule la capsule 2, conditions environnementales, etc.

Le contrôleur central 30 génère ainsi, à partir des premières données D1 et de la consigne de déplacement Cd, des commandes de couple Cc à destination des roues actionnées 3 (c'est-à-dire, ici, à destination des roues entraînées 3a et des roues freinées 3b).

Le contrôleur de positionnement vertical 31 acquiert lui aussi les premières données D1 (ou bien certaines de ces premières données D1), et notamment des données représentatives de niveaux de glissement des roues actionnées 3.

Le contrôleur de positionnement vertical 31 surveille les niveaux de glissement des roues actionnées 3.

Le contrôleur de positionnement vertical 31 établit ou acquiert une répartition de charge en fonction notamment des niveaux de glissement des roues actionnées 3 et en fonction d'une phase de freinage ou d'une phase d'accélération dans laquelle se trouve la capsule 2.

Puis, le contrôleur de positionnement vertical 31 pilote l'actionneur de positionnement vertical 9 de chaque roue actionnée 3 de manière à ajuster la position verticale de ladite roue actionnée 3 pour que la charge appliquée sur ladite roue actionnée 3 corresponde à la répartition de charge.

Pour établir la répartition de charges, le contrôleur de positionnement vertical 31 ajoute de la charge aux roues entraînées 3a au cours d'une phase d'accélération, et aux roues freinées 3b au cours d'une phase de freinage (ainsi qu'aux roues entraînées 3a si elles sont utilisées lors de la phase de freinage).

Au contraire, le contrôleur de positionnement vertical 31 retire de la charge aux roues actionnées 3 dont le glissement est faible, ou bien aux roues non actionnées, ou bien aux roues actionnées 3 dont l'actionnement n'est pas mis en œuvre au cours de la phase d'accélération ou de la phase freinage.

Le contrôleur de positionnement vertical 31 pilote alors les actionneurs de positionnement vertical 9 en fonction notamment de cette répartition de charge. Pour cela, le contrôleur de positionnement vertical 31 produit des commandes de positionnement Cp à destination des actionneurs de positionnement vertical 9, et acquiert des deuxièmes données D2.

Les deuxièmes données D2 comprennent des mesures de deuxièmes paramètres, qui sont produites directement par des deuxièmes capteurs 36, ou bien des estimations de ces deuxièmes paramètres, qui sont produites par des deuxièmes algorithmes d'estimation 37.

Les deuxièmes paramètres sont relatifs aux actionneurs de positionnement vertical 9 et comprennent par exemple, pour chaque actionneur de positionnement vertical 9, une charge supportée par ledit actionneur de positionnement vertical 9, une position linaire de la tige, un courant électrique consommé par le moteur électrique, une position angulaire du rotor du moteur électrique, etc.

Le contrôleur de limitation de couple 32 acquiert les premières données D1, les deuxièmes données D2, ainsi que les commandes de positionnement Cp produites par le contrôleur de positionnement 31.

Le contrôleur de limitation de couple 32 a pour but de limiter la commande de couple Cc produite par le contrôleur central 30 lorsqu'un glissement important ou un patinage survient sur une roue actionnée 3 de la capsule 2.

La limitation de couple mise en œuvre est plus perfectionnée qu'une fonction d'anti-blocage classique. La limitation de couple tient compte, en temps réel, du positionnement vertical des roues actionnées 3 et des commandes de positionnement Cp transmises aux actionneurs de positionnement vertical 9.

En effet, en cas de glissement d'une roue actionnée 3, il convient de réduire le couple d'entraînement ou de freinage de la roue actionnée 3 sauf si le contrôleur de positionnement vertical 31 a pris en compte ce glissement et a commandé un report de charge sur ladite roue actionnée 3 visant à adapter le positionnement vertical pour limiter les effets du glissement.

Le contrôleur de limitation de couple 32 génère donc une commande de limitation Cl qui vise à limiter la commande de couple Cc à destination des roues actionnées 3, et qui dépend des commandes de positionnement Cp produites par le contrôleur de positionnement vertical 31.

Le distributeur de couple 33 acquiert les commandes de couple Cc produites par le contrôleur central 30, les commandes de limitation Cl produites par le contrôleur de limitation de couple 32, et les deuxièmes données D2 provenant des deuxièmes capteurs 36 ou des deuxièmes algorithmes d'estimation 37.

Le distributeur de couple 33 génère des commandes de couples individuelles Cci et indépendantes à destination des dispositifs d'entraînement 6 des roues entraînées 3a et à destination des freins 8 des roues freinées 3b.

Le distributeur de couple 33 contrôle ces commandes de couples individuelles Cci en acquérant des troisièmes données D3.

Les troisièmes données D3 comprennent des mesures de troisièmes paramètres, qui sont produites directement par des troisièmes capteurs 40, ou bien des estimations de ces troisièmes paramètres, qui sont produites par des troisièmes algorithmes d'estimation 41.

Les troisièmes paramètres comprennent les températures des dispositifs d'entraînement 6, des actionneurs de freinage ou des organes de friction des freins 8, les couples d'entraînement, de freinage, etc.

La distribution de couple peut mettre en œuvre une gestion thermique des actionneurs, des fréquences d'activation différentes des actionnements d'anti-blocage entre les dispositifs d'entraînement 6 et les actionneurs de freinage, une gestion selon que la phase en cours est une phase de freinage ou une phase d'accélération, une gestion de l'usure (des organes de friction notamment), un freinage régénératif, une gestion de la consommation d'énergie électrique des moteurs électriques, etc.

On a vu que la répartition de charge, produite par les moyens de commande, est établie en fonction notamment de niveaux de glissement des roues actionnées 3 et en fonction d'une phase de freinage ou d'une phase d'accélération dans laquelle se trouve la capsule 2.

On peut envisager que la répartition de charge soit aussi établie en fonction de températures mesurées ou évaluées de certains ou de tous les équipements qui ont été évoqués. Ces équipements comprennent les roues actionnées 3, les actionneurs de positionnement vertical 9, les dispositifs d'entraînement 6, les freins 8, les organes de friction des freins, les actionneurs de freinage, les moteurs électriques, etc.

On limite la charge appliquée sur certaines roues actionnées 3 lorsque les actionneurs desdites roues actionnées 3 ont été beaucoup activés (en fréquence et en durée), ou bien ont été activés de manière très contraignante. On évite ainsi que les équipements ne subissent un échauffement excessif qui pourrait faire monter leur température au-delà d'une gamme admissible.

On peut aussi envisager que la répartition de charge soit aussi établie en fonction en fonction de niveaux d'usure de pneumatiques des roues entraînées 3. Par exemple, lorsqu'une roue freinée 3b a beaucoup freiné ou bien a subi des freinages contraignants, par exemple des freinages d'urgence, on limite la charge appliquée sur ladite roue freinée pour limiter l'usure de son pneumatique.

On limite de la sorte l'usure des pneumatiques des roues actionnées 3.

On note ici qu'il aurait pu être envisagé, pour modifier la répartition des charges, de faire varier la rigidité des actionneurs de positionnement vertical 9 plutôt que de commander la position de la partie mobile (tige). L'actionneur de positionnement vertical 9 fonctionnerait ainsi comme un ressort dont on modifierait la raideur.

En utilisant une équation d'un ressort idéal : $F = k \left(x+Δx\right) ,$ on comprend que cette méthode modifie le coefficient de raideur k et a un effet sur la position d'équilibre x. La position de la tige mobile doit être modifiée pour rééquilibrer le ressort.

Au contraire, dans l'invention, on ne change pas la raideur du ressort mais on ajoute plutôt un décalage Δx_{off} pour augmenter la charge du ressort.

L'ajout du décalage peut être exprimé sous la forme : $F = k \left(x+Δx+{Δx}_{off}\right) ,$ c'est à dire : $F = k \left(x+Δx\right) + k \left({Δx}_{off}\right) .$

Le terme k (x + Δx) représente la force d'équilibre du ressort et le terme k (Δx_{off}) représente la charge supplémentaire appliquée au ressort du fait de la modification de la position de la tige (en lien avec à Δx_{off} sans être exactement égale à Δx_{off}).

On sait que la capsule *Hyperloop ^{®}* 2 circule dans un tube sous vide. Dans un tube sous vide, toute fuite de fluide est très problématique du fait des phénomènes de dégazage. L'étanchéité de l'actionneur de positionnement vertical 9 est donc un paramètre critique. Or, dans le cas où l'actionneur de positionnement vertical est un actionneur hydraulique, la modification de la raideur consiste à réaliser des transferts de fluide hydrauliques entre des chambres de l'actionneur.

Il est donc très avantageux, dans une application de capsule *Hyperloop ^{®},* de ne pas modifier la raideur du « ressort » pour éviter tout risque potentiel de fuite de fluide.

Dans le cas où l'actionneur de positionnement vertical 9 est un actionneur hydraulique, il aurait aussi pu être envisagé de modifier la géométrie interne des chambres. Cette solution est plus complexe à réaliser et moins efficace, puisque le positionnement de la roue est moins précis.

Bien entendu, l'invention n'est pas limitée au mode de réalisation décrit mais englobe toute variante entrant dans le champ de l'invention telle que définie par les revendications.

L'invention est ici mise en œuvre dans une capsule *Hyperloop ^{®}*. Cependant, l'invention n'est pas limitée à cette application et peut être mise en œuvre dans tout type de capsule destinée à cheminer dans un tube sous vide et, plus généralement, dans tout type de véhicule de transport terrestre, cheminant ou non dans un tube, susceptible de léviter selon tout type de lévitation : capsule, train à sustentation magnétique (électrodynamique ou électromagnétique), etc.

On a décrit ici des actionneurs électromécaniques équipés de moteurs électriques : dispositifs d'entraînement en rotation, actionneurs de freinage, actionneurs de positionnement vertical. On pourrait bien sûr utiliser des actionneurs différents, par exemple hydrauliques ou pneumatiques.

Le nombre de roues et de bogies de la capsule pourrait être différent. On pourrait par exemple avoir six ou huit roues par bogie, trois ou quatre bogies par capsule, etc.

On pourrait aussi avoir une répartition différente entre les roues freinées et les roues entraînées. On peut imaginer aussi que certaines roues soient freinées et entrainées à la fois (c'est-à-dire équipées d'un frein et d'un dispositif d'entraînement), ou bien que seules les roues freinées ou seules les roues entraînées soient munies d'un actionneur de positionnement vertical, etc.

## Revendications

1. Système de déplacement au sol d'un véhicule de transport terrestre susceptible de léviter, comportant une pluralité de roues comprenant au moins une roue actionnée (3), un dispositif d'entraînement (6) de la roue actionnée et/ou un frein (8) de la roue actionnée (3), un actionneur de positionnement vertical (9) agencé pour déplacer verticalement la roue actionnée (3) par rapport à un fuselage du véhicule (2), et des moyens de commande agencés pour, au cours d'une phase d'accélération et/ou au cours d'une phase de freinage du véhicule, piloter l'actionneur de positionnement vertical (9) de manière à ajuster une position verticale de la roue actionnée pour augmenter une charge reposant sur la roue actionnée et donc pour augmenter un effort maximal transmissible au sol par la roue actionnée, de manière à augmenter un couple maximal d'entraînement et/ou de freinage pouvant être produit par le dispositif d'entraînement (6) et/ou par le frein (8) sans que la roue actionnée (3) ne patine ou ne glisse.

2. Système de déplacement au sol selon la revendication 1, comportant une pluralité de roues actionnées comprenant au moins une roue entraînée (3a) et au moins une roue freinée (3b), le système de déplacement au sol comportant de plus un dispositif d'entraînement (6) pour chaque roue entraînée (3a), un frein (8) pour chaque roue freinée (3b), et un actionneur de positionnement vertical (9) pour chaque roue entraînée (3a) et pour chaque roue freinée (3b).

3. Système de déplacement au sol selon la revendication 2, dans lequel les moyens de commande sont agencés pour établir une répartition de charge du véhicule (2) entre les roues actionnées (3), et pour piloter l'actionneur de positionnement vertical (9) de chaque roue actionnée de manière à ajuster la position verticale de ladite roue actionnée pour que la charge appliquée sur ladite roue actionnée corresponde à la répartition de charge.

4. Système de déplacement au sol selon la revendication 3, dans lequel les moyens de commande sont agencés pour établir la répartition de charge en fonction de niveaux de glissement des roues actionnées (3) et en fonction d'une phase de freinage ou d'une phase d'accélération dans laquelle se trouve le véhicule (2).

5. Système de déplacement au sol selon la revendication 4, dans lequel les moyens de commande sont agencés pour établir la répartition de charge en fonction de températures mesurées ou évaluées des roues actionnées (3) et/ou des actionneurs de positionnement vertical (9) et/ou des dispositifs d'entraînement (6) et/ou des freins (8), de manière à éviter qu'un échauffement excessif ne se produise.

6. Système de déplacement au sol selon la revendication 4, dans lequel les moyens de commande sont agencés pour établir la répartition de charge en fonction de niveaux d'usure de pneumatiques des roues actionnées (3).

7. Système de déplacement au sol selon la revendication 2, comportant au moins un bogie (4) indépendant comprenant deux roues entraînées (3a) et deux roues freinées (3b).

8. Système de déplacement au sol selon la revendication 7, dans lequel l'une des deux roues entraînées est située sur un côté droit et l'autre des deux roues entrainées est située sur un côté gauche du bogie, et dans lequel l'une des deux roues freinées est située sur un côté droit et l'autre des deux roues freinées est située sur un côté gauche du bogie.

9. Système de déplacement au sol selon la revendication 8, dans lequel les deux roues entraînées sont des roues externes et les deux roues freinées des roues internes.

10. Système de déplacement au sol selon l'une des revendications précédentes, dans lequel l'actionneur de positionnement vertical (9) comprend une jambe comportant un cylindre solidaire du fuselage et une tige agencée pour coulisser dans le cylindre, la roue actionnée (3) étant montée au bas de la tige.

11. Système de déplacement au sol selon la revendication 10, dans lequel l'actionneur de positionnement vertical (9) est aussi agencé pour étendre la tige et poser la roue actionnée (3) au sol lors de phases d'accélération et de freinage au sol du véhicule (2), et pour rétracter la tige lorsque le véhicule entre en lévitation.

12. Véhicule de transport terrestre susceptible de léviter, comprenant un système de déplacement au sol selon l'une des revendications précédentes.

13. Véhicule selon la revendication 12, le véhicule étant une capsule *Hyperloop ^{®}.*

## Patentansprüche

1. System zur Bewegung entlang des Bodens eines terrestrischen Transportfahrzeugs mit Schwebefähigkeit, das eine Vielzahl von Rädern umfasst, darunter mindestens ein angetriebenes Rad (3), eine Antriebsvorrichtung (6) für das angetriebene Rad und/oder eine Bremse (8) für das angetriebene Rad (3), ein Stellglied zur vertikalen Positionierung (9), das ausgelegt ist, um das angetriebene Rad (3) in Bezug auf einen Fahrzeugrumpf (2) vertikal zu bewegen, und Steuermittel, die ausgelegt sind, um während einer Beschleunigungsphase und/oder während einer Bremsphase des Fahrzeugs das Stellglied zur vertikalen Positionierung (9) so anzusteuern, dass eine vertikale Position des angetriebenen Rads eingeregelt wird, um eine auf dem angetriebenen Rad lastende Belastung zu erhöhen und damit eine maximale, vom angetriebenen Rad auf den Boden übertragbare Kraft zu erhöhen, so dass ein maximales Antriebs- und/oder Bremsmoment erhöht wird, das von der Antriebsvorrichtung (6) und/oder der Bremse (8) erzeugt werden kann, ohne dass das angetriebene Rad (3) durchdreht oder rutscht.

2. System zur Bewegung entlang des Bodens nach Anspruch 1, das eine Vielzahl von angetriebenen Rädern umfasst, die mindestens ein angetriebenes Rad (3a) und mindestens ein gebremstes Rad (3b) umfassen, wobei das System zur Bewegung entlang des Bodens außerdem eine Antriebsvorrichtung (6) für jedes angetriebene Rad (3a), eine Bremse (8) für jedes gebremste Rad (3b) und ein Stellglied zur vertikalen Positionierung (9) für jedes angetriebene Rad (3a) und für jedes gebremste Rad (3b) umfasst.

3. System zur Bewegung entlang des Bodens nach Anspruch 2, wobei die Steuermittel ausgelegt sind, um eine Lastverteilung des Fahrzeugs (2) zwischen den angetriebenen Rädern (3) festzulegen, und um das Stellglied zur vertikalen Positionierung (9) jedes angetriebenen Rads so anzusteuern, dass die vertikale Position des betreffenden angetriebenen Rads so eingeregelt wird, dass die auf dieses angetriebene Rad wirkende Last der Lastverteilung entspricht.

4. System zur Bewegung entlang des Bodens nach Anspruch 3, wobei die Steuermittel ausgelegt sind, um die Lastverteilung in Abhängigkeit von den Schlupfwerten der angetriebenen Räder (3) und in Abhängigkeit von einer Bremsphase oder einer Beschleunigungsphase, in der sich das Fahrzeug (2) befindet, festzulegen.

5. System zur Bewegung entlang des Bodens nach Anspruch 4, wobei die Steuermittel ausgelegt sind, um die Lastverteilung in Abhängigkeit von gemessenen oder ermittelten Temperaturen der angetriebenen Räder (3) und/oder der Stellglieder zur vertikalen Positionierung (9) und/oder der Antriebsvorrichtungen (6) und/oder der Bremsen (8) festzulegen, so dass eine übermäßige Wärmeentwicklung vermieden wird.

6. System zur Bewegung entlang des Bodens nach Anspruch 4, wobei die Steuermittel ausgelegt sind, um die Lastverteilung in Abhängigkeit vom Abnutzungsgrad der Reifen der angetriebenen Räder (3) festzulegen.

7. System zur Bewegung entlang des Bodens nach Anspruch 2, mit mindestens einem unabhängigen Fahrgestell (4), das zwei angetriebene Räder (3a) und zwei gebremste Räder (3b) umfasst.

8. System zur Bewegung entlang des Bodens nach Anspruch 7, wobei sich eines der beiden angetriebenen Räder auf einer rechten Seite und das andere der beiden angetriebenen Räder auf einer linken Seite des Fahrgestells befindet und wobei sich eines der beiden gebremsten Räder auf einer rechten Seite und das andere der beiden gebremsten Räder auf einer linken Seite des Fahrgestells befindet.

9. System zur Bewegung entlang des Bodens nach Anspruch 8, wobei die beiden angetriebenen Räder Außenräder und die beiden gebremsten Räder Innenräder sind.

10. System zur Bewegung entlang des Bodens nach einem der vorstehenden Ansprüche, wobei das Stellglied zur vertikalen Positionierung (9) ein Bein umfasst, das einen fest mit dem Rumpf verbundenen Zylinder und eine in dem Zylinder verschiebbare Stange aufweist, wobei das angetriebene Rad (3) am unteren Ende der Stange angebracht ist.

11. System zur Bewegung entlang des Bodens nach Anspruch 10, wobei das Stellglied zur vertikalen Positionierung (9) außerdem ausgelegt ist, um die Stange auszufahren und das angetriebene Rad (3) während Beschleunigungs- und Bremsphasen des Fahrzeugs (2) auf den Boden abzusetzen und die Stange einzufahren, wenn das Fahrzeug in den Schwebezustand übergeht.

12. Terrestrisches Transportfahrzeug mit Schwebefähigkeit, das ein System zur Bewegung entlang des Bodens nach einem der vorstehenden Ansprüche umfasst.

13. Fahrzeug nach Anspruch 12, wobei es sich bei dem Fahrzeug um eine *Hyperloop*^{®}-Kapsel handelt.

## Claims

1. A ground movement system for a land transport vehicle capable of levitating, the vehicle comprising a plurality of wheels including at least one actuated wheel (3), a drive device (6) for driving the actuated wheel and/or a brake (8) for braking the actuated wheel (3), a vertical positioning actuator (9) arranged to move the actuated wheel (3) vertically relative to a fuselage of the vehicle (2), and control means arranged to act, during an acceleration stage and/or during a braking stage of the vehicle, to control the vertical positioning actuator (9) as to adjust the vertical position of the actuated wheel in order to increase the load carried by the actuated wheel and thus increase the maximum force that can be transmitted to the ground by the actuated wheel so as to increase the maximum drive and/or braking torque that can be produced by the drive device (6) and/or by the brake (8) without the actuated wheel (3) skidding or slipping.

2. A ground movement system according to claim 1, comprising a plurality of actuated wheels including at least one driven wheel (3a) and at least one braked wheel (3b), the ground movement system further comprising a drive device (6) for each driven wheel (3a), a brake (8) for each braked wheel (3b), and a vertical positioning actuator (9) for each driven wheel (3a) and for each braked wheel (3b).

3. A ground movement system according to claim 2, wherein the control means are arranged to establish a load distribution for distributing the load of the vehicle (2) among the actuated wheels (3) and for controlling the vertical positioning actuator (9) of each actuated wheel so as to adjust the vertical position of said actuated wheel so that the load applied to said actuated wheel corresponds to the load distribution.

4. A ground movement system according to claim 3, wherein the control means are arranged to establish the load distribution as a function of degrees of slip of the actuated wheels (3) and as a function of the vehicle (2) being in a braking stage or in an acceleration stage.

5. A ground movement system according to claim 4, wherein the control means are arranged to establish the load distribution as a function of measured or evaluated temperatures of the actuated wheels (3) and/or of the vertical positioning actuators (9) and/or of the drive devices (6) and/or of the brakes (8) so as to avoid any excessive heating occurring.

6. A ground movement system according to claim 4, wherein the control means are arranged to establish the load distribution as a function of degrees of wear of tires of the actuated wheels (3).

7. A ground movement system according to claim 2, comprising at least one independent bogie (4) comprising two driven wheels (3a) and two braked wheels (3b).

8. A ground movement system according to claim 7, wherein one of the two driven wheels is situated on a right side and the other of the two driven wheels is situated on a left side of the bogie, and wherein one of the two braked wheels is situated on a right side and the other of the two braked wheels is situated on a left side of the bogie.

9. A ground movement system according to claim 8, wherein the two driven wheels are outer wheels and the two braked wheels are inner wheels.

10. A ground movement system according to any preceding claim, wherein the vertical positioning actuator (9) comprises a leg having a cylinder secured to the fuselage and a rod arranged to slide inside the cylinder, the actuated wheel (3) being mounted at the bottom end of the rod.

11. A ground movement system according to claim 10, wherein the vertical positioning actuator (9) is also arranged to extend the rod and place the actuated wheel (3) on the ground during stages of accelerating and braking the vehicle (2) on the ground, and to retract the rod while the vehicle is levitating.

12. A land transport vehicle capable of levitating, the vehicle including a ground movement system according to any preceding claim.

13. A vehicle according to claim 12, the vehicle being a *Hyperloop ^{®}* capsule.
